# EUROPÄISCHE PATENTSCHRIFT

(11) **EP 3 334 779 B1**
(45) Veröffentlichungstag und Bekanntmachung des Hinweises auf die Patenterteilung: **19.06.2019**
(21) Anmeldenummer: 16740963.0
(22) Anmeldetag: 14.07.2016
(51) Int. Cl.: C08K 5/05, C08K 5/053, C08K 5/098, C08K 3/00, C08K 3/08, C08L 101/00

(54) **KUNSTSTOFFZUSAMMENSETZUNG, HERSTELLUNGSVERFAHREN UND VERWENDUNG**
PLASTIC COMPOSITION, PRODUCTION METHOD, AND USE OF SAME
COMPOSITION DE MATIÈRE PLASTIQUE, SON PROCÉDÉ DE FABRICATION ET SON UTILISATION

(30) Priorität: 14.08.2015 DE 102015010553; 25.11.2015 DE 102015015276
(43) Veröffentlichungstag der Anmeldung: 20.06.2018
(73) Patentinhaber: ATP Aicher + Tröbs Produktentwicklung GmbH, 83317 Teisendorf (DE)
(72) Erfinder: TIMMROTH, René, 83404 Ainring (DE); AICHER, Helmut, 83364 Neukirchen (DE); TRÖBS, Stefan, 83317 Oberteisendorf (DE)
(74) Vertreter: Laufhütte, Dieter
(86) Internationale Anmeldenummer: PCT/EP2016/001231
(87) Internationale Veröffentlichungsnummer: WO 2017/028939

(56) Entgegenhaltungen:
- DE-A1-102013 107 514

## Beschreibung

Die Erfindung betrifft eine gefüllte Kunststoffzusammensetzung, ein Verfahren zu deren Herstellung und deren Verwendung.

Aus dem Stand der Technik ist die Verwendung gefüllter Kunststoffzusammensetzung zur Herstellung funktioneller Bauteile bekannt. Derartige Zusammensetzungen umfassen typischerweise eine Kunststoffmatrix und einen Füllstoff.

Zur Verbesserung mancher Eigenschaften derartiger funktioneller Bauteile ist ein hoher Füllstoffanteil wünschenswert. Beispielsweise kann ein steigender Füllstoffanteil zu einer Erhöhung bzw. stärkeren Ausprägung der Wärmeleitfähigkeit, der Dichte, der magnetischen Eigenschaften oder der Schirmwirkung gegen elektromagnetische Signale und ionisierende Strahlung führen. Insbesondere wenn der Füllstoffanteil nahe dem theoretischen Maximums liegt, kann eine starke Verbesserung mancher Eigenschaften beobachtet werden, denn in diesem Bereich steigt die Zahl der Partikelkontakte stark an. Von einer Nähe zum theoretischen Maximum kann dann gesprochen werden, wenn der Volumenanteil des Füllstoffes dem Volumenanteil der nativen Füllstoffpartikel bei maximaler Packungsdichte nahekommt. Der Volumenanteil der nativen Füllstoffpartikel bei maximaler Packungsdichte ergibt sich unmittelbar aus der Partikelgrößenverteilung.

Andererseits steigt mit zunehmendem Füllstoffanteil auch die Schmelzviskosität der Kunststoffzusammensetzungen, wodurch hochgefüllte derartige Zusammensetzungen nicht jeder Verarbeitungstechnik zugänglich sind. Während Press- und Vergussmassen zu Ungunsten der Designfreiheit teilweise hoch mit Füllstoff beladen werden können, sind hochgefüllte Kunststoffzusammensetzungen für eine Verarbeitung im Rahmen eines variableren Spritzgussverfahrens oder Extrusionsverfahrens oft nicht geeignet. Ferner werden einige mechanische Eigenschaften der Bauteile durch einen hohen Füllstoffanteil verschlechtert und die hochgefüllten Bauteile tendieren dazu, spröde zu sein.

Die DE 10 2013 107 514 A1 offenbart ein Verbundhalbzeug mit einem hohen Füllstoffanteil, das durch Spritzgießen in Form gebracht werden kann. Das Verbundhalbzeug besteht aus einem thermoplastischen Kunststoff wie Polyamid, PVC, PPS oder PEEK und einem hohen Anteil eines Füllstoffs, beispielsweise Metall und/oder einer Metallverbindung.

Aufgabe der Erfindung ist, möglichst hochgefüllte Kunststoffzusammensetzungen bereitzustellen, die im Rahmen eines Spritzguss- oder Extrusionsverfahrens verarbeitet werden können und zudem akzeptable mechanische Eigenschaften aufweisen.

Vor diesem Hintergrund betrifft die Erfindung eine hochgefüllte Kunststoffzusammensetzung umfassend (a) wenigstens ein polares thermoplastisches Polymer; (b) wenigstens ein metallisches Salz einer ungesättigten aliphatischen Fettsäure; (c) wenigstens einen mehrwertigen Alkohol, dessen Schmelzpunkt nicht mehr als 80°C unterhalb und nicht mehr als 50°C oberhalb des Schmelzpunkts des Polymers (a) liegt; (d) wenigstens einen weiteren Alkohol, der sich von dem Alkohol (c) unterscheidet und dessen Siedepunkt nicht mehr als 100°C unterhalb und nicht mehr als 80°C oberhalb des Schmelzpunkts des Polymers (a) liegt; und (e) wenigstens einen partikulären Füllstoff.

Unter dem Siedepunkt ist der Siedepunkt bei Normaldruck zu verstehen.

Die gefüllte Zusammensetzung kann in granulierter Form vorliegen, um diese beispielsweise im Rahmen eines Extrusions- oder Spritzgussverfahrens verarbeiten zu können. Die Zusammensetzung kann ferner als solides Bauteil vorliegen, welches beispielsweise anhand eines Extrusions- oder Spritzgussverfahrens erhalten werden kann.

In einer Ausführungsform handelt es sich bei der erfindungsgemäßen gefüllten Kunststoffzusammensetzung um eine hochgefüllte Kunststoffzusammensetzung, deren Füllstoffanteil mehr als 40 Vol.-% gemessen am Gesamtvolumen der gefüllten Zusammensetzung beträgt. In einer bevorzugten Ausführungsform beträgt der Füllstoffanteil mehr als 50 Vol.-%. In einer weiter bevorzugten Ausführungsform kann der Füllstoffanteil mehr als 60 Vol.-% betragen.

In einer Ausführungsform weist der partikuläre Füllstoff (e) eine monomodale Verteilung der Partikelgrößen auf. In einer alternativen Ausführungsform weist der Füllstoff eine multimodale Verteilung der Partikelgrößen auf.

Die Erfindung umfasst den Gedanken, dass der Füllstoffanteil in der hochgefüllten Kunststoffzusammensetzung nahe dem theoretischen Maximum liegt, das sich aus der Partikelgrößenverteilung ergibt. Bei Füllstoffen mit einer monomodalen Verteilung der Partikelgrößen liegt das theoretische Maximum typischerweise niedriger (dort beispielsweise bei 65 Vol.-%) als bei Füllstoffen mit einer multimodalen Verteilung der Partikelgrößen (dort beispielsweise bei 75 Vol.-%). Es wurde erkannt, dass viele physikalische Eigenschaften hochgefüllter Kunststoffzusammensetzungen, beispielsweise deren Wärmeleitfähigkeit, weniger stark vom absoluten Füllstoffanteil abhängen als von der Nähe des Füllstoffanteils zum theoretischen Maximum. Dieser Effekt beruht vermutlich darauf, dass diese Effekte maßgeblich von der Anzahl der Teilchenkontakte des Füllstoffes beeinflusst werden und diese Anzahl nahe dem theoretischen Maximum stark zunimmt.

In einer Ausführungsform ist daher vorgesehen, dass der Füllstoffanteil in der Kunststoffzusammensetzung mindestens 80 Vol.-%, vorzugsweise mindestens 90 Vol.-% und weiter vorzugsweise mindestens 95 Vol.-%des theoretischen Maximums beträgt.

Die ungefüllte Kunststoffzusammensetzung kann unter dem Begriff "Organik" zusammengefasst werden. In hochgefüllten bzw. nahe der Packungsgrenze gefüllten erfindungsgemäßen Kunststoffzusammensetzungen wird vermutet, dass der mehrwertige Alkohol (c) während der Verarbeitung zu einer Erhöhung des Schmelzvolumens und einer Erniedrigung der Schmelzviskosität beiträgt, dass der mehrwertige Alkohol (c) im fertigen Bauteil zu einer Erhöhung der Affinität bzw. Bindungsstärke zwischen Organik und Füllstoff beiträgt, dass der weitere Alkohol (d) während der Verarbeitung eine Gasphase ausbildet und so das Volumen der Organik weiter erhöht und die Viskosität weiter erniedrigt, dass der weitere Alkohol (d) im fertigen Bauteil ebenfalls zu einer Erhöhung der Affinität bzw. Bindungsstärke zwischen Organik und Füllstoff beiträgt, und dass das Salz (b) zu einer Homogenisierung der Mischung beiträgt.

In einer Ausführungsform handelt es sich bei dem Füllstoff (e) um ein Metallpulver, ein Metalloxidpulver oder ein Oxidkeramikpulver. Auch der Einsatz von Mischungen umfassend derartige Pulver und der Einsatz von Nichtoxidkeramikpulvern, als solches oder in Mischung, ist denkbar und von der Erfindung umfasst.

Die Füllstoffpartikel haben vorzugsweise eine sphärische bzw. körnige Gestalt. In einer Ausführungsform liegt der durchschnittliche Korndurchmesser der Füllstoffe zwischen 1 µm und 150 µm, vorzugsweise zwischen 20 µm und 100 µm. Der durchschnittliche Korndurchmesser der Füllstoffe kann beispielsweise durch Siebanalyse gemäß DIN 66165 bestimmt werden.

In einer Ausführungsform liegt der Schmelzpunkt des mehrwertigen Alkohols (c) nicht mehr als 50°C unterhalb und/oder nicht mehr als 30°C oberhalb des Schmelzpunkts des Polymers (a).

In einer Ausführungsform liegt der Siedepunkt des weiteren Alkohols (c) nicht mehr als 70°C unterhalb und/oder nicht mehr als 50°C oberhalb des Schmelzpunkts des Polymers (a).

Die angegebenen allgemeinen und bevorzugten maximalen Siede- und Schmelzpunktunterschiede zwischen den Bestandteilen (a), (c) und (d) haben den Hintergrund, dass einerseits das Polymer (a) und der mehrwertige Alkohol (c) während der Verarbeitung in geschmolzenem Zustand vorliegen sollen und der weitere Alkohol (d) während der Verarbeitung gasförmig vorliegen soll, und dass andererseits keiner der Stoffe sich zersetzen soll. Dass der Siedepunkt des weiteren Alkohols (d) bei Normaldruck um bis zu 100°C unterhalb des Schmelzpunkts des Polymers (a) liegen kann, ist dadurch begründet, dass sich während der Verarbeitung ggf. lokale Drücke von mehreren Bar einstellen können, welche zu einer Siedepunkterhöhung führen.

Die polaren Polymere (a) umfassen oder bestehen aus Wiederholungseinheiten, die ihrerseits wenigstens zwei unterschiedliche Atome aufweisen, deren Elektronegativitätsdifferenz nach Pauling zueinander mindestens 0,5 und vorzugsweise mindestens 0,9 oder mindestens 1,2 beträgt. Zwischen den zwei unterschiedlichen Atomen mit der besagten Elektronegativitätsdifferenz liegen innerhalb der Wiederholungseinheit vorzugsweise mindestens ein Kohlenstoffatom oder mindestens eine aromatische Einheit. Beispielsweise liegt zwischen den besagten Atomen mindestens eine Methylengruppe. Vorzugsweise umfassen die Wiederholungseinheiten mindestens eine protische Gruppe, beispielsweise eine OH- und/oder NH-Gruppe.

In einer Ausführungsform weist das Polymer (a) eine durchschnittliche molare Masse von zwischen 10⁴ und 10⁶ g/mol auf. Beispielsweise kann die durchschnittliche molare Masse geeigneter Polymere (a) zwischen 30 000 und 100 000 g/mol liegen.

In einer Ausführungsform liegt der Schmelzpunkt des Polymers (a) bei zwischen 140°C und 400°C.

In einer Ausführungsform ist das Polymer (a) ein semikristallines Polymer mit einem Kristallinitätsgrad von weniger als 80%. Beispielsweise kann der Kristallinitätsgrad zwischen 30 und 60 % liegen.

In einer Ausführungsform ist die Polydispersität des Polymers (a) kleiner 5.

In einer Ausführungsform umfasst das Polymer (a) ein Polyamid. Als Polymer (a) kann auch ausschließlich ein Polyamid verwendet werden.

Geeignete Polyamide umfassen aliphatische, semiaromatische oder aromatische Polyamide, beispielsweise Polyamid 6, Polyamid 66 oder ein Copolyamid. Auch Mischungen aus unterschiedlichen Polyamiden, welche beispielsweise Polyamid 6, Polyamid 66, Polyamid 46, Polyamid 12 und/oder Co-/Terpolyamide umfassen können eingesetzt werden. Ferner eignen sich Mischungen aus Polyamid(en) und anderen thermoplastischen Polymeren wie beispielsweise Polyolefinen.

Weitere geeignete Polymere umfassen Polyimide, Polysulfonamide, Polyvinylalkohole, halogenierte Polymere sowie Polymere mit Säuregruppen, die polar im Sinne der obigen Definition sind.

In einer Ausführungsform handelt es sich bei der Fettsäure des Salzes (b) um eine einwertige Carbonsäure mit mehr als 8 Kohlenstoffatomen und wenigstens einer Doppelbindung. Vorzugsweise weisen die Carbonsäuren weniger als 25 Kohlenstoffatome auf. Die bevorzugte Zahl an Doppelbindungen liegt zwischen 1 und 5. Beispielsweise kann die Zahl der Kohlenstoffatome zwischen 15 und 20 betragen. Die Zahl der Doppelbindungen kann beispielsweise 1 oder 2 betragen. Geeignete Carbonsäuren umfassen Ölsäure und Linolsäure. Bei dem Kation des Salzes kann es sich beispielsweise um ein Alkalimetall handeln, insbesondere um Natrium oder Kalium.

In einer Ausführungsform beträgt der Anteil des Salzes (b) in der ungefüllten Zusammensetzung, d.h. in der Organik, zwischen 1 und 15 Gew.-%. Bevorzugte Bereiche umfassen Anteile von mehr als 3 Gew.-% und von weniger als 7 Gew.-%.

In einer Ausführungsform weist der mehrwertige Alkohol (c) zwischen 2 und 9 Hydroxylgruppen auf.

In einer Ausführungsform weist der mehrwertige Alkohol (c) in der Hauptkette ausschließlich Kohlenstoffatome und ggf. ferner Sauerstoffatome auf.

Die Hauptkette des mehrwertigen Alkohols (c) kann linear oder zyklisch sein bzw. lineare und zyklische Abschnitte aufweisen.

Beispiele geeigneter mehrwertiger Alkohole (c) umfassen 1,2-Ethandiol, 1,2-Propandiol, 1,3-Propandiol, 2,2-Bis(hydroxymethyl)-1,3-propandiol, 1,2,3-Propantriol, 1,2-Butandiol, 1,3-Butandiol, 1,4-Butandiol, 2,3-Butandiol, 2,2-bis(hydroxymethyl)-1,3-butanediol, 2-Buten-1,4-diol, 2-Butin-1,4-diol, 1,2,4-Butantriol, Butan-1,2,3,4-tetrol, 1,6-Hexandiol, 1,2,6-Hexantriol, 3-Hexin-2,5-diol, 3-Hexin-2,5-diol, Mannit, Xylit, Polyole aus der Gruppe der Monosaccharide (beispielsweise Fructose, Lactose oder Mannose) und Vinylalkohol-Polymere.

In einer Ausführungsform beträgt der Anteil des mehrwertigen Alkohols (c) in der ungefüllten Zusammensetzung, d.h. in der Organik, zwischen 3 und 40 Gew.-%. Bevorzugte Bereiche umfassen Anteile von mehr als 10 Gew.-% und von weniger als 30 Gew.-%.

In einer Ausführungsform handelt es sich bei dem weiteren Alkohol (d) um einen ein- oder mehrwertigen und ggf. aromatischen Alkohol. Der Anteil des weiteren Alkohols (d) in der ungefüllten Zusammensetzung, d.h. in der Organik, kann zwischen 3 und 20 Gew.-% betragen. Bevorzugte Volumenanteile des weiteren Alkohols (d) umfassen Anteile von mehr als 5 Gew.-% und von weniger als 15 Gew.-%. Beispiele geeigneter weiterer Alkohole (d) umfassen Methanol, Ethanol, Butanol und Hexanol. Weitere Beispiele umfassen Phenylethylalkohol, Thiophenylmethylalkohol, Hydrocinnamylalkohol, Phenylmethyalkohol, 1-Propylheptylalkohol, 9-Decen-1-ol, α,α-Dimethylphenylmethanol, 1-Dodecanol, α-Ethylphenylmethanol, 4-Hydroxylphenylmethanol, 4-Isopropylphenylmethanol, 4-Methoxyphenylmethanol, 2-Methylphenylmethanol, 6-Methyl-1-heptanol, 2-Nitrophenylmethanol, 1-Nonanol, 1-Octacosanol, 1-Octanol, 2-Octanol, 1-Tetradecanol, 1-Tridecanol, 1-Undecanol und 2-Undecanol.

Der Gewichtsanteil des Polymers (a) in der Organik ergibt sich aus der Differenz zwischen der Summe der Anteile der weiteren Additive und 100 Gew.-%.

Weitere geeignete Additive umfassen Phenole, wie beispielsweise Phenol, Kresol, Resorcin, Hydrochinon, Bisphenol A und deren halogenisierte Derivate. Weitere geeignete Additive umfassen unsubstituierte oder halogenierte organische Säure wie beispielsweise Ameisensäure oder Essigsäure. Weitere geeignete Additive umfassen Fettsäureester. Fettsäureester können beispielsweise einen Einfluss auf die Schmelzviskositätsabsenkung der Kunststoffzusammensetzung nehmen und/oder können zur Vorbehandlung des Füllstoffes (e) dienen. Weitere geeignete Additive umfassen Alkylsilane. Weitere geeignete Additive umfassen organische Titanate, organische Phosphonate und organische Phosphate. Jedes dieser Additive kann beispielsweise in einer Menge von zwischen 0,1 und 5 Vol.-% in der Zusammensetzung vorliegen.

Vor dem eingangs genannten Hintergrund betrifft die Erfindung ferner ein Verfahren zur Herstellung einer erfindungsgemäßen gefüllten Kunststoffzusammensetzung mit den Schritten A Suspendieren des Füllstoffes (e) in einem Lösungsmittel; B Einmischen des Salzes (b) und des mehrwertigen Alkohols (c) in die Suspension; C Trocknen der Suspension zur Entfernung des Lösungsmittels; D Vermischen des Rückstandes mit dem Polymer (a); und E Hinzufügen des weiteren Alkohols (d).

In der so hergestellten Zusammensetzung sind das Salz (b) und der mehrwertige Alkohol (c) nicht nur einfach in der Mischung vorhanden, sondern haften durch die vorhergehende Oberflächenbehandlung des Füllstoffes an diesem an.

An das Einmischen gemäß Schritt B kann sich vor der Trocknung gemäß Schritt C eine Einwirkphase anschließen. Die Dauer dieser Phase kann beispielsweise zwischen 10 Minuten und 2 Stunden betragen. Als Temperatur kann Raumtemperatur oder auch eine erhöhte Temperatur gewählt werden. Während der Einwirkphase kann eine Agitation der Suspension beispielsweise durch Rühren erfolgen. Alternativ kann vorgesehen sein, dass die Suspension während der Einwirkphase still steht.

Das Vermischen gemäß Schritt D kann im trockenen Zustand erfolgen, wobei der pulverförmige, ggf. zuvor gemahlene Rückstand aus Schritt C mit pulverförmigem oder granulatförmigem Polymer (a) vermischt wird. Ferner ist ein Vermischen im schmelzflüssigen Zustand des Polymers denkbar.

In einer Ausführungsform folgen auf das Vermischen gemäß Schritt D eine Compoundierung im schmelzflüssigen Zustand, eine Abkühlung und eine Zerkleinerung.

Die Hinzufügung des weiteren Alkohols (d) gemäß Schritt E kann durch Besprühen der zerkleinerten trockenen Mischung mit diesem weiteren Alkohol (d) erfolgen.

Geeignete Lösungsmittel umfassen polare Lösungsmittel, beispielsweise aprotische polare Lösungsmittel wie Aceton oder protische polare Lösungsmittel wie Ethanol.

Letztlich betrifft die Erfindung vor dem eingangs genannten Hintergrund die Verwendung einer erfindungsgemäßen hochgefüllten Kunststoffzusammensetzung zur Herstellung eines Formteils im Rahmen eines Extrusions- oder Spritzgussverfahrens.

Die vorliegende Erfindung schafft die Möglichkeit, in verarbeitungstechnisch und mechanisch sinnvoller Weise einen Volumenfüllgrad des Füllstoffes im Polymer zu erreichen, der sehr nahe an der theoretisch maximalen Packungsdichte der nativen Füllstoffpulverpartikel liegt. So können bestimmte physikalische Eigenschaften des Füllstoffes, wie z.B. magnetische Eigenschaften oder Wärmeleitfähigkeit sehr stark in der Kunststoffzusammensetzung zu tragen kommen, sodass neue Bereiche z.B. im Metallersatz erschlossen werden können.

Nachfolgend werden weitere Einzelheiten und Vorteile der Erfindung unter Bezugnahme auf den Stand der Technik, die gestellten Anforderungen und die vermutete Art des Zusammenwirkens der Füllstoffpartikel und der Matrix erklärt. Hierbei ist anzumerken, dass diese Ausführungen erklärende und keine Einschränkende Bedeutung, beispielsweise auf das notwendige Vorhandensein eines bestimmten Stoffes haben.

Die erfindungsgemäßen Zusammensetzungen können in einer Ausführungsform als thermoplastische, organisch modifizierte Kunststoffzusammensetzung für die Herstellung hochgepackter plastifizierbarer kunststoffgebundener Pulver / Fasern / Carbon-Nanotubes, Whisker bzw. hochgefüllter thermoplastischer Kunststoffe als Material für Spritzguss, Extrusion und ähnliche Verfahren angesehen werden. Einsatzbereiche umfassen Kunststoffe mit verbesserten physikalischen Eigenschaften wie z. B. Wärmeleitung, magnetische Erscheinungen, hohe Dichte, Abschwächung von ionisierender Strahlung, Abschirmung gegen Hochfrequenz und Abrasionswirkung sowie Feedstocks für MIM- und CIM- Verfahren sowie 3D-Druckverfahren.

Derartige Materialien müssen abhängig vom Einsatzbereich unterschiedlichen Anforderungsprofilen genügen. Beispiele umfassen die nachfolgend genannten. Ein modifiziertes Polymersystem für diese Anwendung muss im fertigen Bauteil folgenden Anforderungen gerecht werden. Es verleiht dem Werkstoff seine mechanischen Eigenschaften wie Zugfestigkeit, E-Modul, Zähigkeit, Temperaturbeständigkeit, Härte und Abrasionsbeständigkeit. Diese Anforderungen gelten sowohl für das Polymer an sich als auch für die Anbindung an den pulver-/faserförmigen Füllstoff. Es muss gegen gegenüber den Umwelt-, Prozess- und Einsatzbedingungen chemisch beständig sein. Es muss sowohl während der Compoundierung des Werkstoffes und als auch während der Bauteilherstellung den gesamten Werkstoff auch bei höchster Packung bzw. hohen Füllgraden ausreichend plastifizieren und eine für Kunststoffspritzguss typische komplexe Formgebung ermöglichen. Es muss ebenso auf der haftungs-/bindungsassoziierten Füllstoff - Oberfläche eine Schicht erzeugt werden, die ausgezeichnete Schmiereigenschaften hat und höchsten Drücken standhält. Es muss eine sehr geringe Schmelzviskosität aufweisen, die wesentlich geringer ist als die des nativen Polymers. Es muss in der Lage sein, den Unterschied in der Packungsdichte zwischen dem in Fließbewegung befindlichen und in dichtester Packung ruhenden Füllstoff durch temporären Volumenzuwachs auszugleichen. Das Erstarrungs- und Kristallisationsverhalten darf keine zu hohen inneren Spannungen im Bauteil erzeugen. Trotz starker Anbindung an die Füllstoffpartikel in der Wärme unter Plastifizierungsbedingungen muss eine leichte Entformbarkeit aus dem Werkzeug unter Erstarrungsbedingungen gewährleistet sein.

Im Stand der Technik wird derzeit wird in den o.g. Einsatzbereichen bei keinem Werkstoff die theoretisch maximal erreichbare Packungsdichte des Pulvers auch nur annähernd erreicht. Die verwendeten Polymerzubereitungen auf Basis technischer Thermoplaste wie den schwach polaren Polyamiden PA 11, PA 12 u. ä. oder Polyolefinen ermöglichen bei globulären monomodalen Pulvern bestenfalls Gehalte, die um ≥ 10 Vol.-% unter den nach der Formel von LEE für Partikelgrößenverteilungen errechenbaren Werten von ca. 65 Vol.-% Packungsdichte bei monomodalen Pulvern d90 < 45 µm liegen. Bei irregulären wie z.B. spratzigen oder plättchenförmigen Morphologien sind die Werte noch weiter entfernt. Ebenso fallen die Gehalte zusätzlich noch weiter ab, wenn polarere Polymere höherer Festigkeiten verwendet werden, wie beispielsweise PA 46, PA6 oder PA 66. Bereits ab > 55 Vol.-% Pulveranteil kommt es bei o. g. Pulvern im Allgemeinen sowohl zu einer signifikanten Verschlechterung der Fließeigenschaften bei der Verarbeitung im Spritzguss als auch im Besonderen der mechanischen Eigenschaften, da die Bindung des Polymers an die Pulveroberfläche nicht hinreichend stark ist. Deshalb liegt zurzeit die Grenze für Wolfram-Abschirmmaterialien mit Dichte 11 g/cm³ bei der Abschirmleistung von Blei (14 g/cm3 mit einer Abschirmleistung > 50% über Blei sollten möglich sein) oder die Wärmeleitung eines isotropen Wärmeleitkunststoffes bei 2-3 W/mK (bei Erreichen der theor. Packungsdichte sollten nach Lewis & Nielsen 15-20 W/mK möglich sein). Das gleiche Missverhältnis gibt es auch bei permanent- und weichmagnetischen Werkstoffen, deren mechanische Festigkeiten zudem stark abfallen. Bei den exemplarisch genannten Beispielen der bisher erreichten und erfindungsgemäß erreichbaren Dichte beträgt der Volumenfüllgradzuwachs ca. 16 Vol.-%, das absolute Volumen des Füllstoffes im gleichbleibenden Kunststoffvolumen verdoppelt sich jedoch. Etwas bessere Werte erreichen Kunstharze für Press- und Gießmassen und neuerdings kettenverkürzte Polyolefine. Hierbei sind aber Einschränkungen bei der Designfreiheit und der Wirtschaftlichkeit beziehungsweise bei den möglichen Einsatzbedingungen bezüglich Festigkeit und Temperatur zu beachten.

Gemäß der vorliegenden Erfindung werden polare Polymere verwendet, da die meisten physikalisch interessanten Füllstoffe ebenfalls polare Oberflächeneigenschaften besitzen. Die Polymere betreffen neben den bekannten Polyamiden, deren Derivaten und Legierungen die Polyimide, Polysulfonamide, Polyvinylalkohole, ebenfalls deren Derivate und Legierungen sowie einige bestimmte halogenhaltige Polymere. Bei den ausgewählten Füllstoffen wurden vor allem Metall und Metalloxidpulver sowie Oxidkeramikpulver und ggf. Nichtoxidkeramikpulver berücksichtigt. Für hochgefüllte thermoplastische Kunststoffe wurde ein modulares System an ausgewählten organischen Additiven zur Modifizierung des Basispolymers entwickelt. Dies ermöglicht die Herstellung hochgepackter plastifizierbarer kunststoffgebundener Pulver bzw. hochgefüllter thermoplastischer Kunststoffe als Material für Spritzguss, Extrusion und ähnliche Verfahren. Das modulare System ermöglicht die gezielte Beeinflussung singulärer und multipler Eigenschaften des modifizierten Kunststoffes sowohl während der Bauteilherstellung als auch im fertigen Bauteil. Damit grenzt sich diese Erfindung von den Entwicklungen letzter Arbeiten ab, welche versucht haben, die Viskosität der gefüllten Kunststoffe durch die Verwendung multimodaler Pulvermischungen zu erniedrigen. Da sich die Fließverbesserungen dabei nur durch Erhöhung der Packungsdichte erzielen lassen, verschlechtern sich die physikalischen Eigenschaften, da der Volumenfüllgrad nicht in demselben Maße mit erhöht werden kann, da es der Polymerschmelze an Benetzungskapazität und Schmierfilmvolumen fehlt.

Es können die Eigenschaften Haftung/Bindung, Viskosität, Volumen, Festigkeit, Schlagzähigkeit, Gleiten, Entformen modular eingestellt werden, wobei diese nicht nur singulär sondern auch multipel und teilweise synergistisch kombiniert werden. Für die Realisierung hoher Packungen mit einer hinreichend vollständigen und gleichzeitig beweglichen Benetzung genügt die Schmelzviskosität polarer Polymere nicht mehr. Diese muss stark herabgesetzt werden, ohne permanenten Verlust der Molekülstruktur und ohne Abnahme der Haftungs-/Bindungskraft an hydrophilen Oberflächen. Im Sinne dieser Erfindung erfolgt dies zunächst durch partielle Substitution der hochviskosen Polymerschmelzviskosität mit niedrigviskoser Lösemittelviskosität und Salzschmelzviskosität geeigneter protischer Lösemittel und organischer Salze, die bezüglich ihrer Siede- und Schmelzpunkte thermodynamisch kompatibel zu den Polymerschmelzen sind. Die erhaltene Viskosität ist wesentlich geringer. Damit steigt die Benetzungskapazität eines gegebenen Schmelzvolumens stark an. Um die Benetzungskapazität weiterhin zu steigern und das Schmierfilmvolumen zu erhöhen, wird darüber hinaus gleichzeitig das Schmelzvolumens temporär stark erhöht, wobei primär das Schmelzvolumen der flüssigen Phase erhöht wird, dessen Volumenzuwachs Voraussetzung für das zusätzliche Einbringen eines sekundären definierten Gasvolumens ist, welches das primär erzeugte Flüssigvolumen um den Gasvolumenanteil zusätzlich aufbläht.

Auf die genaue Funktionsweise des Lösens der Polymere wird hier nicht tiefer eingegangen, da sie im Grunde bekannt ist und hier nur in neuartiger Art und Weise ausgenutzt wird. Im Besonderen wird die stärkere Polarität kristalliner Polyamides in geeigneter Lösung dazu ausgenutzt, über den stark viskositätserniedrigenden Effekt hinaus, durch die diffusionsgesteuerte Erniedrigung der Kohäsionskraft des Polymeres eine starke Erhöhung der Adhäsionskraft zum polaren Füllstoff zu erhalten. Das bedeutet für die entwickelte Organik, dass die Adhäsionskraft unabhängiger von der Polarität einer Füllstoffoberfläche ist. Die Polyamidschmelze erfordert einen Alkohol, dessen Schmelzpunkt in der Nähe derer Schmelztemperatur liegt. Durch hohe Volumenanteile dieser Alkohole im Polymer kann das Schmelzvolumen des Polymers stark erhöht werden.

Die mehrwertigen Alkohole wirken zudem als Weichmacher für die Polyamide und verbessern dank ihrer hohen Polarität und Affinität sowohl zu polaren Füllstoffen als auch zur polymeren Matrix die Einlagerung von Füllstoffpartikel durch Förderung der Penetration der Polymerketten innerhalb des Partikelgerüstes des Füllstoffes. Ein im flüssigen Zustand zugesetzter geringerer Volumenanteil eines unter Schmelzbedingungen aber gasförmigen Alkohols, der ebenfalls in der kondensierten Phase über Wasserstoffbrücken mit dem Polymer assoziiert ist, führt zu einer weiteren Volumenvergrößerung. Die Lösemittel haben zudem einen neu erkannten Effekt auf die Schlagzähigkeit. Die weichmachende Wirkung der kondensierten Lösemittelphase im erstarrten Polymer wirkt ähnlich wie ein Elastomer. Durch den Zusatz der Fettsäuresalze wird die Mischbarkeit und Homogenisierung der Polyamidschmelze mit der Alkoholschmelze verbessert.

Gleichzeitig verhindern diese Salze die Kristallisation der hochschmelzenden Alkohole während der Kühlung und beugen so einer Versprödung des Materials vor. Zudem wirken sie bei hohen Temperaturen als Gleitmittel und bei niederen Temperaturen als Entformungsmittel. Weiterhin wirken sie festigkeitsfördernd auf Kristallisation.

Weitere Einzelheiten und Vorteile der Erfindung ergeben sich aus dem nachfolgend beschriebenen Ausführungsbeispiel.

In einem geeigneten Gefäß werden 34,1 Volumensteile Aluminiumpulver in 41,8 Volumensteilen Aceton gegeben und gut gerührt. Als Aluminiumpulver wird eines mit folgender Korngrößenklassifizierung verwendet: d5 < 10 µm, d10 < 15 µm, d20 < 20 µm, d50 < 25 µm, d70 < 30 µm, d80 < 35 µm, d100 < 145 µm. Zu dieser Suspension werden 1,1 Volumensteile Natriumoleat und 4,4 Volumensteile 2,2-Bis(hydroxymethyl)-1,3-propandiol gegeben, gerührt und 30 min bei Raumtemperatur belassen.

Anschließend wird die Suspension getrocknet.

Die getrocknete Mischung wird anschließend mit 15,4 Volumensteilen Polyamid 6 verrührt. Das Polyamid 6 hat einen Kristallinitätsgrad von < 45 % und eine mittlere Molmasse von < 70 000 g/mol. Auf diese Pulvermischung werden 3,2 Volumensteile Phenylmethylalkohol gesprüht. Die gesamte Mischung wird in einen einfachen Mischer homogen verrührt.

Die erhaltene pulverförmige Zusammensetzung wird in einem Sigmakneter compoundiert und in einer Mühle spritzgießfertig granuliert.

Im Resultat wird eine thermoplastisch spritzgießbare Zusammensetzung aus Polyamid 6 und Aluminiumpulver mit einem Füllstoffanteil von 62 Vol.-% erhalten. Der theoretisch maximale Füllstoffanteil bei Verwendung des genannten Pulvers betrüge 65 Vol.-%.

## Patentansprüche

1. Gefüllte Kunststoffzusammensetzung umfassend:
(a) wenigstens ein polares thermoplastisches Polymer;
(b) wenigstens ein metallisches Salz einer ungesättigten aliphatischen Fettsäure;
(c) wenigstens einen mehrwertigen Alkohol, dessen Schmelzpunkt nicht mehr als 80°C unterhalb und nicht mehr als 50°C oberhalb des Schmelzpunkts des Polymers (a) liegt;
(d) wenigstens einen weiteren Alkohol, der sich von dem Alkohol (c) unterscheidet und dessen Siedepunkt nicht mehr als 100°C unterhalb und nicht mehr als 80°C oberhalb des Schmelzpunkts des Polymers (a) liegt; und
(e) wenigstens einen partikulären Füllstoff (e).

2. Kunststoffzusammensetzung nach Anspruch 1, **dadurch gekennzeichnet, dass** es sich bei der Kunststoffzusammensetzung um eine hochgefüllte Kunststoffzusammensetzung handelt, deren Füllstoffanteil mehr als 40 Vol.-% gemessen am Gesamtvolumen der gefüllten Zusammensetzung und/oder mehr als 80 Vol.-% des theoretischen Maximums beträgt.

3. Zusammensetzung nach einem der vorhergehenden Ansprüche, **dadurch gekennzeichnet, dass** der Schmelzpunkt des mehrwertigen Alkohols (c) nicht mehr als 50°C unterhalb und/oder nicht mehr als 30°C oberhalb des Schmelzpunkts des Polymers (a) liegt; und/oder dass der Siedepunkt des weiteren Alkohols (d) nicht mehr als 70°C unterhalb und/oder nicht mehr als 50°C oberhalb des Schmelzpunkts des Polymers (a) liegt.

4. Zusammensetzung nach einem der vorhergehenden Ansprüche, **dadurch gekennzeichnet, dass** es sich bei dem Füllstoff (e) um ein Metallpulver, ein Metalloxidpulver oder ein Oxidkeramikpulver handelt oder dass der Füllstoff (e) ein Metallpulver, ein Metalloxidpulver oder ein Oxidkeramikpulver umfasst; und/oder dass der durchschnittliche Korndurchmesser der Füllstoffe zwischen 1 µm und 150 µm liegt.

5. Zusammensetzung nach einem der vorhergehenden Ansprüche, **dadurch gekennzeichnet, dass** das Polymer (a) eine durchschnittliche molare Masse von zwischen 10⁴ und 10⁶ g/mol aufweist und/oder dass der Schmelzpunkt des Polymers (a) bei zwischen 140°C und 400°C liegt.

6. Zusammensetzung nach einem der vorhergehenden Ansprüche, **dadurch gekennzeichnet, dass** das Polymer (a) ein semikristallines Polymer mit einem Kristallinitätsgrad von weniger als 80% ist und/oder dass die Polydispersität des Polymers (a) weniger als 5 beträgt.

7. Zusammensetzung nach einem der vorhergehenden Ansprüche, **dadurch gekennzeichnet, dass** das Polymer (a) ein Polyamid umfasst oder dass es sich bei dem Polymer (a) um ein Polyamid handelt.

8. Zusammensetzung nach einem der vorhergehenden Ansprüche, **dadurch gekennzeichnet, dass** es sich bei der Fettsäure des Salzes (b) um eine einwertige Carbonsäure mit mehr als 8 Kohlenstoffatomen und mit wenigstens einer Doppelbindung handelt.

9. Zusammensetzung nach einem der vorhergehenden Ansprüche, **dadurch gekennzeichnet, dass** der Anteil des Salzes (b) in der ungefüllten Zusammensetzung zwischen 1 und 15 Gew.-% und vorzugsweise zwischen 3 und 7 Gew.-% beträgt.

10. Zusammensetzung nach einem der vorhergehenden Ansprüche, **dadurch gekennzeichnet, dass** der mehrwertige Alkohol (c) zwischen 2 und 8 Hydroxylgruppen aufweist und/oder dass der mehrwertige Alkohol (c) in der Hauptkette, die linear oder zyklisch sein kann bzw. lineare und zyklische Abschnitte aufweisen kann, ausschließlich Kohlenstoffatome und ggf. Sauerstoffatome aufweist.

11. Zusammensetzung nach einem der vorhergehenden Ansprüche, **dadurch gekennzeichnet, dass** der Anteil des mehrwertigen Alkohols (c) in der ungefüllten Zusammensetzung zwischen 3 und 40 Gew.-% und vorzugsweise zwischen 10 und 30 Gew.-% beträgt.

12. Zusammensetzung nach einem der vorhergehenden Ansprüche, **dadurch gekennzeichnet, dass** es sich bei dem Alkohol (d) um einen ein- oder mehrwertigen aromatischen Alkohol handelt und/oder dass der Anteil des Alkohols (d) in der Zusammensetzung zwischen 3 und 20 Gew.-% und vorzugsweise zwischen 5 und 15 Gew.-% beträgt.

13. Verfahren zur Herstellung einer gefüllten Kunststoffzusammensetzung nach einem der Ansprüche 1 bis 12, wobei das Verfahren die folgenden Schritte aufweist:
A Suspendieren des Füllstoffes (e) in einem Lösungsmittel;
B Einmischen des Salzes (b) und des mehrwertigen Alkohols (c) in die Suspension;
C Trocknen der Suspension zur Entfernung des Lösungsmittels; und
D Vermischen des Rückstandes mit dem Polymer (a); und
E Hinzufügen des weiteren Alkohols (d).

14. Verwendung einer gefüllten Kunststoffzusammensetzung nach einem der Ansprüche 1 bis 12 zur Herstellung eines Formteils im Rahmen eines Extrusions- oder Spritzgussverfahrens.

## Claims

1. A filled plastic composition comprising:
(a) at least one polar thermoplastic polymer;
(b) at least one metallic salt of an unsaturated aliphatic fatty acid;
(c) at least one polyhydric alcohol, whose melting point is no more than 80 °C below and no more than 50 °C above the melting point of the polymer (a);
(d) at least one further alcohol that is different from the alcohol (c), and whose boiling point is no more than 100 °C below and no more than 80 °C above the melting point of the polymer (a); and
(e) at least one particulate filler material (e).

2. A plastic composition in accordance with claim 1, **characterized in that** the plastic composition is a highly filled plastic composition whose filling material portion amounts to more than 40 vol.% measured at the total volume of the filled composition and/or more than 80 vol.% of the theoretical maximum.

3. A composition in accordance with one of the preceding claims, **characterized in that** the melting point of the polyhydric alcohol (c) is no more than 50°C below and/or no more than 30°C above the melting point of the polymer (a); and/or **in that** the boiling point of the further alcohol (c) is no more than 70°C below and/or no more than 50°C above the melting point of the polymer (a).

4. A composition in accordance with one of the preceding claims, **characterized in that** the filler material (e) is a metal powder, a metal oxide powder or an oxide ceramic powder; or **in that** the filler material (e) is a metal powder, a metal oxide powder or an oxide ceramic powder; and/or **in that** the mean grain diameter of the filler materials is between 1 µm and 150 µm.

5. A composition in accordance with one of the preceding claims, **characterized in that** the polymer (a) has an average molar mass of between 10⁴ and 10⁶ g/mol; and/or **in that** the melting point of the polymer (a) is between 140°C and 400°C.

6. A composition in accordance with one of the preceding claims, **characterized in that** the polymer (a) is a semicrystalline polymer having a degree of crystallinity of less than 80%; and/or **in that** the polydispersity of the polymer (a) is less than 5.

7. A composition in accordance with one of the preceding claims, **characterized in that** the polymer (a) comprises a polyamide; and/or **in that** the polymer (a) is a polyamide.

8. A composition in accordance with one of the preceding claims, **characterized in that** the fatty acid of the salt (b) is a monovalent carboxylic acid having more than 8 carbon atoms and having at least one double bond.

9. A composition in accordance with one of the preceding claims, **characterized in that** the portion of the salt (b) in the unfilled composition amounts to between 1 and 15% by weight, and preferably between 3 and 7% by weight.

10. A composition in accordance with one of the preceding claims, **characterized in that** the polyhydric alcohol (c) has between 2 and 8 hydroxyl groups; and/or **in that** the polyhydric alcohol (c) in the main chain, that can be linear or cyclic or can have linear and cyclic sections, has only carbon atoms and, optionally, oxygen atoms.

11. A composition in accordance with one of the preceding claims, **characterized in that** the portion of the polyhydric alcohol (c) in the unfilled composition amounts to between 3 and 40% by weight, and preferably between 10 and 30% by weight.

12. A composition in accordance with one of the preceding claims, **characterized in that** the alcohol (d) is a monohydric or polyhydric aromatic alcohol; and/or in that the portion of the alcohol (d) in the composition amounts to between 3 and 20% by weight, and preferably to between 5 and 15% by weight.

13. A method of manufacturing a filled plastic composition in accordance with one of the claims 1 to 12, said method comprising the following steps:
A suspending the filler material (e) in a solvent;
B admixing the salt (b) and the polyhydric alcohol (c) into the suspension;
C drying the suspension for removing the solvent; and
D mixing the residue with the polymer (a); and
E adding the further alcohol (d).

14. Use of a filled plastic composition in accordance with one of the claims 1 to 12 for manufacturing a molded part as part of an extrusion or injection molding process.

## Revendications

1. Composition de matière plastique chargée, comprenant :
(a) au moins un polymère thermoplastique polaire ;
(b) au moins un sel métallique d'un acide gras aliphatique insaturé ;
(c) au moins un polyalcool, dont le point de fusion ne se trouve pas plus de 80 °C en dessous et pas plus de 50 °C au-dessus du point de fusion du polymère (a) ;
(d) au moins un autre alcool, qui est différent de l'alcool (c) et dont le point d'ébullition ne se trouve pas plus de 100°C en dessous et pas plus de 80°C au-dessus du point de fusion du polymère (a) ; et
(e) au moins une matière de charge particulaire (e).

2. Composition de matière plastique selon la revendication 1, **caractérisée en ce que** la composition de matière plastique est une composition de matière plastique à charge élevée, dont la part de matière de charge est de plus de 40 %vol, mesurée par rapport au volume total de la composition chargée et/ou de plus de 80 %vol du maximum théorique.

3. Composition selon l'une des revendications précédentes, **caractérisée en ce que** le point de fusion du polyalcool (c) ne se trouve pas plus de 50 °C en dessous et/ou pas plus de 30 °C au-dessus du point de fusion du polymère (a) ; et/ou **en ce que** le point d'ébullition de l'autre alcool (d) ne se trouve pas plus de 70 °C en dessous et/ou pas plus de 50 °C au-dessus du point de fusion du polymère (a).

4. Composition selon l'une des revendications précédentes, **caractérisée en ce que** la matière de charge (e) est une poudre métallique, une poudre d'oxyde métallique ou une poudre de céramique oxydée ou **en ce que** la matière de charge (e) comprend une poudre métallique, une poudre d'oxyde métallique ou une poudre de céramique oxydée ; et/ou **en ce que** le diamètre de grain moyen des matières de charge est compris entre 1 µm et 150 µm.

5. Composition selon l'une des revendications précédentes, **caractérisée en ce que** le polymère (a) présente une masse molaire moyenne comprise entre 10⁴ et 10⁶ g/mol et/ou **en ce que** le point de fusion du polymère (a) est compris entre environ 140 °C et 400 °C.

6. Composition selon l'une des revendications précédentes, **caractérisée en ce que** le polymère (a) est un polymère semi-cristallin ayant un taux de cristallinité inférieur à 80 % et/ou **en ce que** la polydispersité du polymère (a) est inférieure à 5.

7. Composition selon l'une des revendications précédentes, **caractérisée en ce que** le polymère (a) comprend un polyamide ou **en ce que** le polymère (a) est un polyamide.

8. Composition selon l'une des revendications précédentes, **caractérisée en ce que** l'acide gras du sel (b) est un monoacide carboxylique ayant plus de 8 atomes de carbone et au moins une double liaison.

9. Composition selon l'une des revendications précédentes, **caractérisée en ce que** la part du sel (b) dans la composition non chargée est comprise entre 1 et 15 % en poids et de préférence entre 3 et 7 % en poids.

10. Composition selon l'une des revendications précédentes, **caractérisée en ce que** le polyalcool (c) comporte entre 2 et 8 groupes hydroxy et/ou **en ce que** le polyalcool (c) comporte uniquement des atomes de carbone et le cas échéant des atomes d'oxygène dans sa chaîne principale, qui peut être linéaire ou cyclique ou qui peut comporter des portions linéaires et cycliques.

11. Composition selon l'une des revendications précédentes, **caractérisée en ce que** la part du polyalcool (c) dans la composition non chargée est comprise entre 3 et 40 % en poids et de préférence entre 10 et 30 % en poids.

12. Composition selon l'une des revendications précédentes, **caractérisée en ce que** l'alcool (d) est un monoalcool ou polyalcool aromatique et/ou **en ce que** la part de l'alcool (d) dans la composition est comprise entre 3 et 20 % en poids et de préférence entre 5 et 15 % en poids.

13. Procédé de fabrication d'une composition de matière plastique chargée selon l'une des revendications 1 à 12, le procédé comportant les étapes suivantes consistant à :
A mettre en suspension la matière de charge (e) dans un solvant ;
B incorporer le sel (b) et le polyalcool (c) dans la suspension ;
C faire sécher la suspension pour éliminer le solvant ; et
D mélanger le résidu avec le polymère (a) ; et
E ajouter l'autre alcool (d).

14. Utilisation de la composition de matière plastique chargée selon l'une des revendications 1 à 12 pour la fabrication d'une pièce moulée dans le cadre d'un procédé d'extrusion ou de moulage par injection.
